# EUROPÄISCHE PATENTSCHRIFT

(11) **EP 0 681 629 B1**
(45) Veröffentlichungstag und Bekanntmachung des Hinweises auf die Patenterteilung: **21.08.1996**
(21) Anmeldenummer: 94904969.6
(22) Anmeldetag: 26.01.1994
(51) Int. Cl.: E02B 15/04

(54) **ÖLABSAUGESTATION**
OIL SUCKING-OFF STATION
POSTE PERMETTANT D'ASPIRER DU PETROLE

(30) Priorität: 26.01.1993 DE 4302048; 02.11.1993 DE 4336963
(43) Veröffentlichungstag der Anmeldung: 15.11.1995
(73) Patentinhaber: STEINER, Walter, Georg, D-60487 Frankfurt (DE)
(72) Erfinder: STEINER, Walter, Georg, D-60487 Frankfurt (DE)
(74) Vertreter: Patentanwälte Eisele, Otten & Roth
(86) Internationale Anmeldenummer: DE9400066
(87) Internationale Veröffentlichungsnummer: WO9417250

(56) Entgegenhaltungen:
- DE-A- 2 721 108
- FR-A- 1 564 195
- FR-A- 2 069 926
- FR-A- 2 410 093
- GB-A- 1 207 154
- GB-A- 1 549 343

## Beschreibung

Die Erfindung betrifft eine Vorrichtung zum Absorbieren von schwimmfähigen Flüssigkeiten wie Öl, Benzin oder dergleichen insbesondere bei öl- oder benzinverseuchten Wasseroberflächen nach dem Oberbegriff des Anspruchs 1.

### Stand der Technik:

Bei Schiffsunglücken und insbesondere Tankerhavarien können große Mengen Öl austreten, die auf der Wasseroberfläche einen Ölteppich oder ölverseuchtes Seewasser bilden. Alle bisherigen Maßnahmen, solche Ölteppiche oder ölverseuchtes Seewasser von der Wasseroberfläche abzusaugen, erwiesen sich als wenig effektiv. Beispielsweise wurde der Ölteppich oder das ölverseuchte Seewasser mit Schwimmbarrieren eingedämmt, um diesen dann von der Wasseroberfläche abzusaugen. Dies ist nur bei geringem Seegang möglich, wobei das Absaugvolumen im allgemeinen nicht der geforderten Menge entspricht. Ein hoher Seegang befördert den Ölteppich oder das ölverseuchte Seewasser über solche Schwimmbarrieren.

Auch der Einsatz von Chemikalien erwies sich infolge der Geruchsbelästigung und anderer Folgeerscheinungen, wie Absinken des Ölgemisches auf den Meeresgrund, als wenig effizient.

Aus der FR-A-2 673 214 ist eine Anlage zum Absorbieren von Ölteppichen bekannt geworden, bei der mit einer aus mehreren Baugruppen und Aggregaten bestehenden Ölabsaugestation Ölteppiche unterhalb des Wasserspiegels großvolumig abgesaugt werden. Bei einer besonderen, gattungsbildenden Ausführungsform dieser Druckschrift (FR-A-2 673 214, Fig. 7) ist ein im Wasser schwimmender Ölauffangbehälter vorgesehen, der an seinen oberen Wandungsabschnitten einen auf der Wasseroberfläche aufliegenden Schwimmkörper aufweist. Die auf dem Wasser schwimmende Ölschicht wird seitlich unter den Schwimmkörper geführt und tritt durch Öffnungen in den Wandungsabschnitten in einen Auffangbehälter ein. Der Auffangbehälter selbst ist mit einer Saugleitung verbunden, die die im Auffangbehälter aufgenommene Flüssigkeit aus dem Behälter nach unten hin absaugt und über Leitungen zu einem Beiboot oder dergleichen führt. Diese Anlage hat den Vorteil, daß die mehr oder weniger dicke Ölschicht stets unterhalb des Schwimmkörpers gesammelt und dem Ölauffangbehälter zugeführt wird. Der Auftrieb des Ölauffangbehälters selbst sowie die Einlauffläche für die anzusaugende Flüssigkeit im Auffangbehälter bestimmen das Maß bzw. die Menge der aufgenommenen Flüssigkeit. Bei dieser Anlage kann demzufolge nur schwer eine Trennung zwischen Ölschicht und übriger Wasseroberfläche vorgenommen werden, was ggf. zu einer Ansaugung von großen Mengen nur wenig verunreinigtem Wasser führen kann und damit den Wirkungsgrad der Anlage verschlechtert.

Eine weitere Anlage zum Absorbieren von Ölteppichen ist beispielsweise aus der DE-A-27 21 108 bekannt. Bei dieser sehr großräumigen Anlage befindet sich im Zentrum einer schwimmfähig gemachten Gerüstkonstruktion ein kegelstumpfförmiges Gehäuse mit seitlichen Eintrittsöffnungen zur Aufnahme des ölverschmutzten Oberflächenwassers. Auch hier richtet sich die Eindringtiefe der Einlauföffnungen nach dem Maß der Eintauchtiefe der an den äußeren Gerüstenden befindlichen Schwimmkörper. Eine in der Dicke definierte Aufnahmeschicht eines Ölteppichs ist nicht einstellbar.

Verwiesen wird weiterhin auf die französische Patentschrift FR-A-24 10 093, aus der eine Ölabsaugestation bekannt ist, die topfförmig als Schwimmkörper aufgebaut ist. Bei dieser Vorrichtung wird der Ölteppich an der Oberseite der schwimmenden Vorrichtung über Einlaufschlitze aufgenommen. Die richtige Schwimmlage und Eintauchtiefe einer solchen Vorrichtung bestimmt demnach das Maß der auf die Oberseite gelangenden Ölflüssigkeit.

### Aufgabe und Vorteile der Erfindung:

Der Erfindung liegt die Aufgabe zugrunde, eine Ölabsaugevorrichtung zu schaffen, die eine sehr gezielte und damit effiziente Absorbierung eines Ölteppichs oder ölverseuchten Seewassers ermöglicht. Dabei soll die Anlage so konzipiert sein, daß sie einen Ölteppich oder ölverseuchtes Wasser großflächig absorbieren kann, so daß sie nach Tankerhavarien in Hafenanlagen, Küstenbereichen, auf offenen oder geschlossenen Seen oder sonstigen Gewässern einsetzbar ist, wobei auch die Versorgung von leckgeschlagenen Bohrinseln oder beschädigten Ölzufuhrleitungen entsprechend behandelt werden können.

Der Erfindung liegt der Kerngedanke zugrunde, daß die Ölabsaugestation einen weitestgehend auf der Wasseroberfläche aufliegenden Schwimmkörper umfaßt, der nicht oder nur wenig in die Wasseroberfläche eindringt, so daß die auf der Wasseroberfläche schwimmende Ölschicht praktisch unter diesen Schwimmkörper gelangen kann. Die Ölabsaugestation hat demzufolge aufgrund ihres Volumens und aufgrund weiterer Auftriebsmaßnahmen eine solche Eintauchtiefe, daß der obere, auf der Wasseroberfläche aufliegende Schwimmkörper eine Art obere Begrenzung für den aufzunehmenden Ölteppich bildet. Die untere Begrenzung des aufzunehmenden Ölteppichs wird durch eine darüber hinaus vorgesehene Ansaugwanne gebildet, so daß Schwimmkörper und Ansaugwanne eine maulartige Öffnung für die aufzunehmende Ölschicht bzw. für den aufzunehmenden Ölteppich bilden. Dabei ist die Einlaufbreite dieser Aufnahmeöffnung je nach Anwendungsfall variabel.

Durch diese Maßnahme kann eine sehr gezielte und damit effiziente Aufnahme des Ölteppichs mittels der Ölabsaugestation erfolgen, der nachfolgend in einen innerhalb der Ölabsaugestation enthaltenen Auffangbehälter geleitet wird. Von dort aus kann das aufgefangene Öl mittels Pumpen und Absaugleitungen in ein benachbartes Bunkerschiff transportiert werden.

Weitere Vorteile und Einzelheiten der Erfindung ergeben sich aus den Zeichnungen und sind in den nachfolgend beschriebenen Ausführungsbeispielen näher erläutert. Es zeigen
- Fig. 1: eine perspektivische Ansicht einer Ölabsaugestation mit teilweisem Schnitt,
- Fig. 2a: eine schematische Darstellung der Ölabsaugestation nach Fig. 1 mit teilweiser Schnittdarstellung,
- Fig. 2b: eine Draufsicht auf den oberen Bereich der Station nach Fig. 2a,
- Fig. 3: eine schematische Darstellung eines weiteren Ausführungsbeispiels in Seitenansicht,
- Fig. 4: eine Seitenansicht mit halbiertem Längsschnitt zur Darstellung weiterer Einzelheiten und
- Fig. 5: ein Schaltungsschema zur Beaufschlagung der Hochleistungs-Druckpumpen.

### Beschreibung der Ausführungsbeispiele:

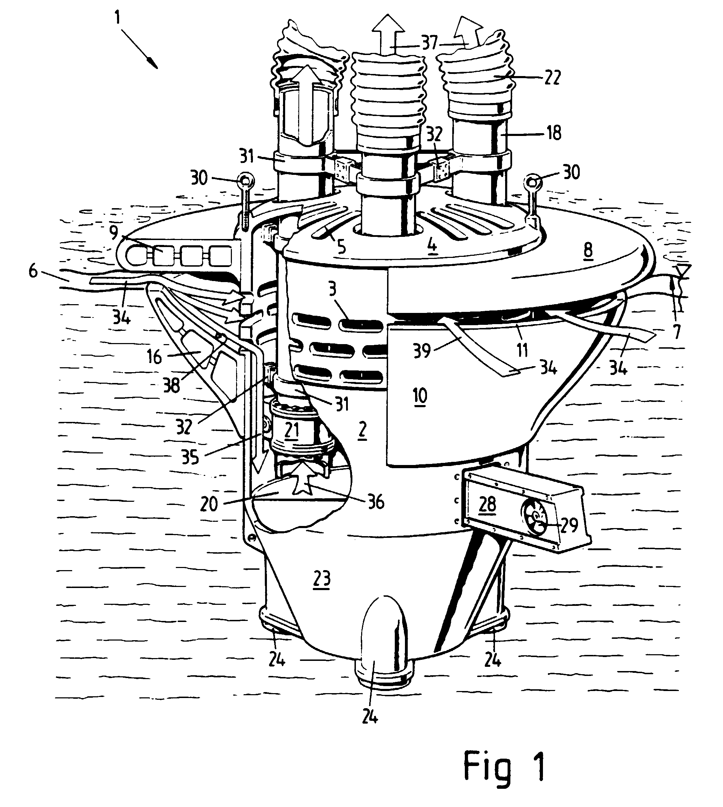

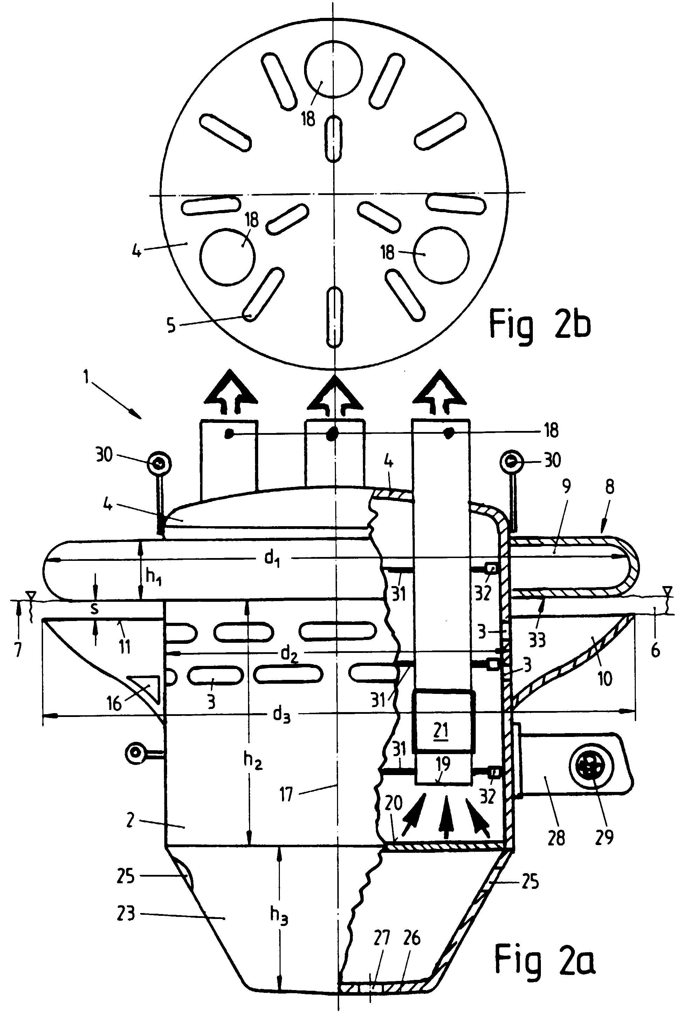

Gemäß der perspektivischen Ansicht in Fig. 1 bzw. Seitenansicht in Fig. 2a besteht die erfindungsgemäße Ölabsaugestation 1 aus einem zylinderförmigen Basiskörper 2 mit einer großen Anzahl, in seiner oberen Mantelfläche enthaltenen Einlauföffnungen 3, die als horizontale Längsschlitze oder kreisförmige Bohrungen ausgebildet sind. Eine radiusförmige oder kalottenförmige Abdeckkuppel 4 verschließt den oberen Teil des zylinderförmigen Basiskörpers 2 und weist ebenfalls schlitzförmige Einlauföffnungen 5 auf, die radial nach außen laufen (siehe Fig. 2b). Der zylinderförmige Basiskörper 2 dient als Auffangbehälter 2 für einen zu entsorgenden Ölteppich 6 an der Wasseroberfläche 7. Der Ölauffangbehälter 2 ist in seinem oberen Bereich durch einen kreisringförmigen, ggf. in Ringsegmente aufgeteilten Schwimmkörper 8 umgeben, der in seinem Inneren eine Vielzahl von Luftkanälen 9 aufweist. Die Luftkanäle 9 dienen als Auftriebskammern und sind ggf. derart gestaltet, daß der Schwimmkörper 8 ähnlich wie ein Schwimmring grundsätzlich auf der Wasseroberfläche 7 aufliegt. Die Luftkanäle 9 können aufblasbar ausgestaltet sein. Sie können auch mit anderen Auftriebsmitteln ausgefüllt sein. Wie sich aus Fig. 1 ergibt, können die Luftkanäle 9 aus mehreren, ringförmig umlaufenden Einzelkammern bestehen, die unterschiedlich stark mit Luft oder einem sonstigen Auftriebsmittel gefüllt werden können.

Der Außendurchmesser d₁ des Schwimmkörpers beträgt d₁ ≈ 7 m. Der Außendurchmesser des Auffangbehälters 2 beträgt d₂ ≈ 3 m, seine Höhe z. B. h₂ ≈ 2,5 m. Die Höhe des Schwimmkörpers 8 beträgt h₁ ≈ 0,5 m.

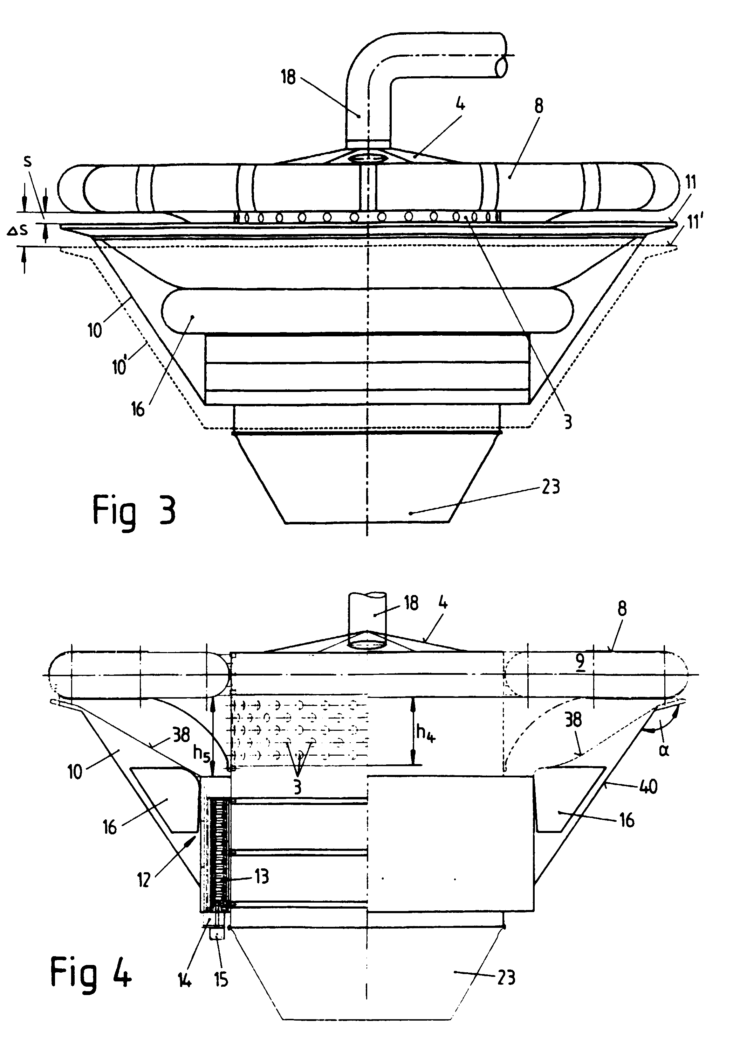

Knapp unterhalb des Schwimmkörpers 8 befindet sich eine parabolförmige Ansaugwanne 10, deren oberer Rand 11 in einem definierten Abstand s unterhalb des Schwimmkörpers angeordnet ist. Wie aus den Figuren 3 und 4 ersichtlich, kann dieser Spalt s in seiner Stärke variiert werden, wozu eine Höhenverstelleinrichtung 12 dient. Die maximale Hubverstellung ist in Fig. 3 mit Δs dargestellt und beträgt Δs ≈ 250 bis 300 mm. Die untere Stellung der Ansaugwanne ist mit 10' bezeichnet.

Die Höhenverstelleinrichtung 12 umfaßt eine Gewindespindel 13 sowie eine Spindelmutter 14. Den Antrieb der Gewindespindel 13 übernimmt ein Antriebsmotor 15 (siehe Fig. 4).

Aus den Figuren 1, 4 ist weiterhin ersichtlich, daß die Ansaugwanne 10 ebenfalls beispielsweise als Luftpolster ausgebildete Auftriebskörper 16 aufweist, die in ihrem Volumen ggf. variabel sind.

In den Ölauffangbehälter 2 münden drei symmetrisch um die Symmetriemittelachse 17 angeordnete Absaugrohre 18, die mit ihrem unteren Ende 19 etwa bis zum geschlossenen Boden 20 des Ölauffangbehälters 2 reichen. In die Absaugrohre 18 sind Hochleistungs-Druckpumpen 21 integriert, die zur Förderung des im Ölauffangbehälters 2 gesammelten Öles bzw. der ölverseuchten Flüssigkeit dienen. Im oberen Bereich ragen die Absaugrohre 18 durch die Abdeckkuppel 4 hindurch (siehe Fig. 1 bis Fig. 2b) und weisen in ihrem oberen Bereich flexible Schläuche 22 auf, die zum flexiblen Anschluß an weitere Rohrleitungen zu einem Bunkerschiff dienen.

Unterhalb des geschlossenen Bodens 20 des Ölauffangbehälters 2 befindet sich ein Stabilisator 23 mit Abstellfüßen 24. Der Stabilisator weist in seinem oberen Wandungsabschnitt mehrere Zuflußbohrungen 25 auf, durch welche Wasser eindringen kann. Gleichermaßen sind in seinem Boden 26 weitere Zuflußbohrungen 27 enthalten, durch welche Wasser zufließen kann. Der im Querschnitt kegelstumpfförmige Stabilisator 23 ist demnach mit Wasser geflutet und verhält sich bei starkem Seegang ähnlich wie ein nach unten ragendes Stabilisierungsschwert. Hierdurch wird die Ölabsaugestation in ihren Schwankungen bei stärkerem Seegang stabilisiert.

Im unteren Bereich des zylinderförmigen Auffangbehälters 2 befindet sich ein Ruderblatt 28 mit einer Querruderschraube 29, die zur Stabilisierung der Lage der Ölabsaugestation dienen.

Die Ölabsaugestation 1 kann über Transport- und Sicherungsösen 30 transportiert und in der Lage fixiert werden.

Die Absaugrohre 18 sind im Inneren des Auffangbehälters 2 durch Befestigungsstege 31 gehalten, die mit zusätzlichen Schwingungsdämpfern 32 bestückt sind. Auch oberhalb der Abdeckkuppel 4 befinden sich Befestigungsstege 31 mit Schwingungsdämpfer 32 für die drei symmetrisch angeordneten Absaugrohre 18. Hier fehlt jedoch die Befestigung zu einer Innenwandung, wie sie innerhalb des Behälters vorhanden ist.

Die erfindungsgemäße Ölabsaugestation 1 dient demnach zum großflächigen und großvolumigen Absorbieren von Ölteppichen und ölkontaminierten Süß- oder Seewasser unterhalb der Wasseroberfläche. Dabei ist die Anlage in Kompaktbauweise hergestellt und aus seewasser-, säure- und feuerresistenten Baugruppen, Aggregaten und Hilfsfunktionseinheiten zusammengesetzt. Der zylindrische Auffangbehälter 2 bildet dabei das Fundament der Anlage und nimmt entsprechend seiner Höhe h₂ ≈ 2 bis 4 m und seinem Durchmesser d₂ ≈ 3 m eine große Menge des zu absorbierenden Ölteppichs auf. Die Schwimmeigenschaft der Ölabsaugestation wird durch die einzelnen Auftriebskörper 9, 16 sowie durch das freibleibende Volumen des Auffangbehälters 2 gewährleistet, wobei der Schwimmkörper 8 grundsätzlich auf der Wasseroberfläche aufliegen soll, um den definierten Einlaufspalt s zwischen Schwimmkörper 8 und Ansaugwanne 10 zu bilden. Der Außendurchmesser d₃ der Ansaugwanne 10 entspricht etwa dem Außendurchmesser d₁ des Schwimmkörpers 8 (siehe Fig. 2a). Er kann jedoch entsprechend der Darstellung in Fig. 1 auch etwas kleiner ausgebildet sein.

Die Ölabsaugestation ist in ihrem Einsatz im Wasser so ausgerichtet, daß sich der Ölteppich 6 stets in Höhe der Unterkante 33 des Schwimmkörpers 8 befindet, d. h. die Wasseroberfläche 7 bildet in etwa die Unterkante 33 des Schwimmkörpers 8. Die Oberkante bzw. der obere Rand 11 der Ansaugwanne 10 wird mittels der Höhenverstelleinrichtung 12 so eingestellt, daß der Spalt s ungefähr gleich der Dicke des Ölteppichs 6 entspricht. Auf diese Art und Weise wird das auf dem Wasser aufschwimmende Öl sehr gezielt entnommen. Der Einlauf des Ölteppichs 6 in den Einlaufspalt 39 ist in Fig. 1 mit Pfeilen 34 gekennzeichnet, die den Ölteppich durch die Einlauföffnungen 3 in das Behälterinnere einfließen lassen (Pfeil 35). Das in den Ölauffangbehälter 2 einlaufende Öl wird entsprechend der Pfeildarstellung 36 durch die Absaugrohre 18 in ein zugehöriges Bunkerboot transportiert (Pfeil 37).

Der kegelstumpfförmige Stabilisator (23) weist eine Höhe h₃ ≈ 1 m auf. Er verhindert, daß die Ölabsaugestation auch bei hohem Seegang kentert bzw. er gibt der gesamten Anlage eine ruhige, dem jeweiligen Seegang angepaßte Lage.

Die obere Abdeckkuppel 4 mit ihren Einlauföffnungen 5 ermöglicht eine Ölaufnahme bei überschlagenden Wellen, so daß auch auf diesem Wege Öl oder kontaminiertes Wasser in die Anlage einfließen kann.

Gemäß der Darstellung der erfindungsgemäßen Ölabsaugestation in Figuren 3 und 4 können die im Ölauffangbehälter 2 vorgesehenen Einlauföffnungen 3 schlitzförmig oder als Bohrungen ausgebildet sein. Sie befinden sich über einem Höhenbereich h₄, der etwa dem maximalen inneren Höhenbereich h₅ der Ansaugwanne 10 entspricht. Der innere Wandungsabschnitt 38 der Ansaugwanne 10 läuft demzufolge trichterförmig bis zu einer Höhe h₅ zu, in welcher sich die Einlauföffnungen 3 befinden. Die Einlauföffnungen 3 verhindern, daß Fremdkörper wie Treibholz oder dergleichen in das Behälterinnere des Ölauffangbehälters 2 eindringen.

Die in ihrer Höhe justierbare parabolförmige Ansaugwanne 10 erhöht die gezielte Sogwirkung auf den aufzunehmenden Ölteppich 6. Insbesondere durch die justierbare Spaltbreite s wird gezielt nur solche Flüssigkeit aufgesaugt, die mit Öl kontaminiert ist. Die Justierung der parabolförmigen Ansaugwanne 10 geschieht über rollengelagerte Prismenführungen und insbesondere über die Verstelleinrichtung 12.

Die Oberkante 11 der parabolförmigen, justierbaren Ansaugwanne 10 befindet sich stets unterhalb der Wasseroberfläche 7, so daß der Ölteppich 7 zwangsläufig durch die so gebildete Einlauföffnung 39 in die Ölabsaugestation fließt. Hierdurch ergibt sich eine Zwangsbefüllung der Anlage. Zum Befüllen der Anlage können zusätzliche Flutventile eingesetzt werden. Ist die Ölabsaugestation mit Öl befüllt, werden die Pumpen 21 in Betrieb genommen. Durch die hohe Druckleistung der tiefliegenden Hochleistungs-Druckpumpen 21 entsteht eine hohe Sogwirkung in der Ölabsaugestation.

Das Ruderblatt 28 sowie die Querruderschraube 29 verhindern, daß sich die Ölabsaugestation im stationären Betrieb oder im Schleppverband um die eigene Achse dreht. Die Querruderschraube 29 kann mit einem Navigationssystem gekoppelt sein und ferngesteuert oder manuell bedient werden.

Wie aus Fig. 4 ersichtlich, kann der obere, äußere Rand der Ansaugwanne 10 gegenüber der Kegelaußenmantelfläche leicht abgeknickt mit einem Winkel α ≈ 140° ausgebildet sein. Hierdurch wird eine Art "Tellerrand" gebildet, der die gezielte Aufnahme der Ölschicht ermöglicht.

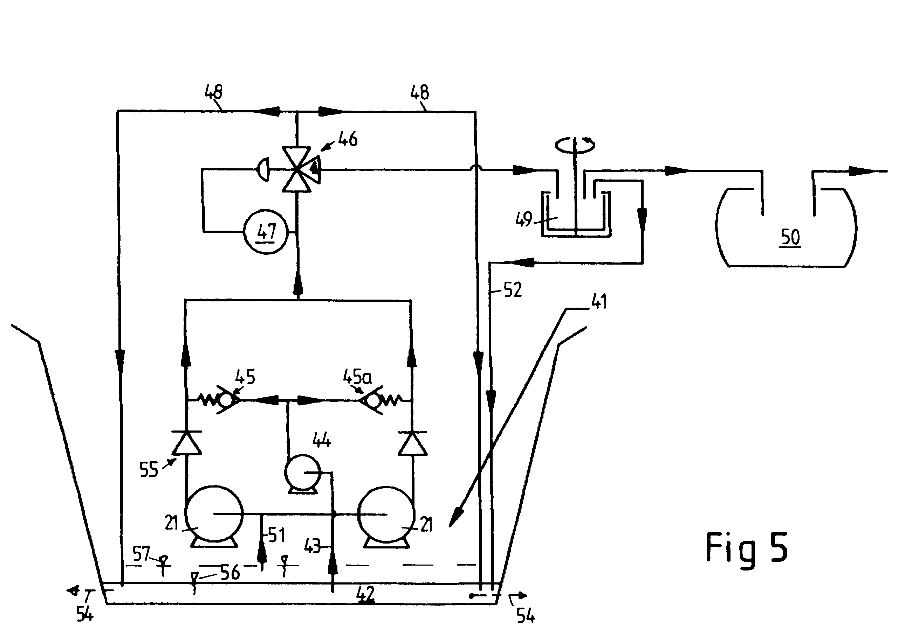

Der Pumpvorgang des Wasser-Ölgemisches ist ein kontinuierlicher Prozeß solange der Reinigungsvorgang stattfindet. Hierzu ist in Fig. 5 ein Schaltungsschema der Betätigung des Hochleistungspumpsystems dargestellt.

Beim Starten der Anlage wird in einer ersten Betriebsphase diese lediglich mit Wasser beaufschlagt (Pfeil 41), wobei das Wasser 41 vom unteren Boden 42 der Anlage über eine Förderleitung 43 einer Hochdruckpumpe 44 zugeführt wird. Diese Hochdruckpumpe 44 erzeugt einen konstanten Druck auf die beiden Rückschlagventile 45, 45a. Hierdurch wird auch verhindert, daß die Hochleistungs-Druckpumpen 21 austrocknen. Die als Zentrifugalpumpen ausgebildeten Hochleistungs-Druckpumpen 21 können hydraulisch, elektrisch oder pneumatisch angetrieben sein.

Der erste Teil des Wassers wird im Kreislauf zurück in die Anlage gepumpt. Hierfür ist ein 3-Wege-Ventil 46 vorgesehen, welches von einem Kontrollorgan 47 geregelt wird. Das Kontrollorgan mißt die Dichte des Mediums und steuert das 3-Wege-Ventil 46.

Sobald das Kontrollorgan 47 angesaugtes Wasser registriert, wird das 3-Wege-Ventil derart geschaltet, daß dieses über Leitungen 48 zurück zum Boden 42 der Anlage gepumpt wird, der sich deutlich unterhalb der Verschmutzungsoberfläche 57 des Öls innerhalb des Behälters befindet (Wasseroberfläche: siehe Bezugszeichen 56).

Sobald das Kontrollorgan 47 das Medium Öl registriert, wird in einer zweiten Betriebsphase das 3-Wege-Ventil 46 umgeschaltet und das verunreinigte Öl wird über eine, ggf. als Zentrifuge ausgebildete Abscheideranlage 49 in einen Auffangbehälter 50, z. B. einem Tanker, Auffangtanks oder dergleichen, gepumpt. Das Kontrollsystem 47 zur Unterscheidung von Wasser und Öl in Verbindung mit der Trenneinrichtung gewährleistet, daß möglichst eine optimale Trennung zwischen angesaugtem Öl und Wasser vollzogen wird, so daß möglichst nur angesaugtes Öl entsorgt wird.

Die Hochleistungs-Druckpumpen 21 saugen demzufolge über die Leitung 51 im wesentlichen nur oben schwimmendes Öl ab, welches entsorgt werden soll. Das darunterliegende Wasser kann über die zusätzliche Hochdruckpumpe 44 entsorgt werden. Überflüssiges Wasser kann von der Anlage über die Leitungen 54 nach außen gepumpt werden. Sperrventile 55 bestimmen die Strömungsrichtung durch die Hochdruckpumpen 21.

In der Fig. 5 wird von der Abscheideranlage 49 eine weitere Leitung 52 zum Boden 42 der Anlage geführt, um überflüssiges Wasser zurückzupumpen.

## Patentansprüche

1. Vorrichtung zum Absorbieren von schwimmfähigen Flüssigkeiten wie Öl, Benzin oder dergleichen insbesondere bei öl- oder benzinverseuchten Wasseroberflächen, mit einem trog- oder zylinderförmigen, in die Wasseroberfläche eintauchenden Auffangbehälter (2), der in seinem oberen Bereich durch einen, vorzugsweise ringförmigen Schwimmkörper (8) wenigstens zum Teil getragen ist, wobei unmittelbar unterhalb des Schwimmkörpers (8) Eintrittsöffnungen (3) für die zu absorbierende Flüssigkeit (6) vorgesehen sind und die in den Auffangbehälter (2) absorbierte Flüssigkeit (6) über wenigstens eine Förderpumpe (21) zu einer Entsorgungsstation transportierbar ist, dadurch gekennzeichnet, daß die Auftriebsmittel (9) des Schwimmkörpers (8) derart ausgebildet sind, daß dieser weitestgehend auf der Wasseroberfläche (7) aufliegt, daß sich unterhalb des Schwimmkörpers (8) eine den Auffangbehälter (2) umgebende, trichterförmige Ansaugwanne (10) befindet, die mit dem Schwimmkörper (8) einen definierten Ansaugspalt (s) bildet, der der Breite des anzusaugenden Flüssigkeitstroms entspricht.

2. Vorrichtung nach Anspruch 1, dadurch gekennzeichnet, daß der Ansaugspalt (s) zwischen Unterseite (33) des Schwimmkörpers (8) und Oberseite (11) der parabolförmigen Ansaugwanne (10) in seiner Breite variabel ist und s ≤ 300 mm entspricht.

3. Vorrichtung nach Anspruch 1, dadurch gekennzeichnet, daß der Auffangbehälter (2) und/oder der Schwimmkörper (8) und/oder die trichterförmige Ansaugwanne (10) rotationssymmetrisch ausgebildet sind.

4. Vorrichtung nach Anspruch 1 oder 3, dadurch gekennzeichnet, daß der Schwimmkörper (8) als kreisringförmiger, scheibenartiger Schwimmring ausgebildet ist, der in seinem Inneren eine oder mehrere Auftriebskammern (9) mit variablem Volumen aufweist, wobei der Schwimmring (8) vorzugsweise in mehrere separate Schwimmsegmente aufgeteilt ist.

5. Vorrichtung nach Anspruch 4, dadurch gekennzeichnet, daß der innere Ringbereich des Schwimmkörpers (8) mit einer mit Eintrittsöffnungen (5) versehenen Abdeckplatte (4) abgedeckt ist, wobei die Eintrittsöffnungen (5) zu dem Auffangbehälter (2) führen.

6. Vorrichtung nach einem der vorhergehenden Ansprüche, dadurch gekennzeichnet, daß wenigstens ein, vorzugsweise drei symmetrisch angeordnete, vertikale Absaugrohre (18) in den Auffangbehälter (2) münden und durch die obere Abdeckplatte (4) nach außen führen und daß jedes Absaugrohr (18) vorzugsweise ein flexibles Anschlußelement (22) für einen Anschluß eines weiteren Anschlußrohres aufweist.

7. Vorrichtung nach Anspruch 6, dadurch gekennzeichnet, daß das Absaugrohr (18) vorzugsweise in seinem unteren Bereich eine Hochleistungs-Druckpumpe (21) aufweist.

8. Vorrichtung nach einem der vorhergehenden Ansprüche, dadurch gekennzeichnet, daß die parabolförmige oder trichterförmige Ansaugwanne (10) etwa in der halben Höhe des Auffangbehälters (2) an diesen angesetzt und mit seiner Innenwandung (38) von der Außenmantelfläche des Auffangbehälters (2) trichterförmig zur Unterseite (33) des Schwimmkörpers (8) führt.

9. Vorrichtung nach Anspruch 8, dadurch gekennzeichnet, daß der obere Rand (11) der Ansaugwanne (10) mit dessen äußerer Kegelmantelfläche (40) einen stumpfen Winkel α 140° einschließt.

10. Vorrichtung nach einem der vorhergehenden Ansprüche, dadurch gekennzeichnet, daß die Ansaugwanne (10) eine Höhenverstelleinrichtung (12) aufweist, mit einer Gewindespindel (13) mit Motorantrieb (15) sowie einer Spindelmutter (14).

11. Vorrichtung nach Anspruch 10, dadurch gekennzeichnet, daß die Ansaugwanne (10) als Hohlkörper mit weiteren Auftriebskörpern (16) ausgebildet ist.

12. Vorrichtung nach einem der vorhergehenden Ansprüche, dadurch gekennzeichnet, daß unterhalb des Auffangbehälters (2) ein vorzugsweise zylindrischer Hohlraum als Stabilisator (23) vorgesehen ist, der vorzugsweise seitliche und/oder untere Eintrittsöffnungen (25, 27) aufweist.

13. Vorrichtung nach einem der vorhergehenden Ansprüche, dadurch gekennzeichnet, daß die äußere Mantelfläche des Auffangbehälters (2) oder des Stabilisators (23) eine Rudereinrichtung (28) ggf. mit Antriebsschraube umfaßt, wobei die Antriebsschraube vorzugsweise als separate oder zusätzliche Querruderschraube (29) ausgebildet ist.

## Claims

1. Device for absorbing floating liquids such as oil, gasoline or the like, in particular oil or gasoline-polluted water surfaces, with a trough or cylindrical-shaped collecting container (2) immersed in the water, which is carried at least partly at the top by a preferably annular floating body (8), in which directly below the floating body (8) there are inlet openings (3) for the liquid (6) to be absorbed, and the liquid (6) absorbed in the collecting containers (2) is transportable by at least one feed pump (21) to a disposal station, characterised in that the buoyancy means (9) of the floating body (8) are designed so that the latter rests as far as possible on the water surface (7) and there is a funnel-shaped suction trough (10) surrounding the collecting container (2) which forms a defined suction gap (s) with the floating body (8) which corresponds to the width of the flow of liquid to be suctioned.

2. Device according to claim 1, characterised in that the suction gap (s) between the lower side (33) of the floating body (8) and the upper side (11) of the parabolic suction trough (10) is variable in width and corresponds to s ≤ 300 mm.

3. Device according to claim 1, characterised in that the collecting container (2) and/or the floating body (8) and/or the funnel-shaped suction trough (10) are designed to be rotationally symmetrical.

4. Device according to claim 1 or 3, characterised in that the floating body (8) is designed as a circular ring-shaped, disc-like floating ring, which on the inside comprises one or more buoyancy chambers (9) with varying volumes, whereby the floating ring (8) is preferably divided into several separate floating segments.

5. Device according to claim 4, characterised in that the inner ring region of the floating body (8) is covered with a cover plate (4) provided with inlet openings (5), whereby the inlet openings (5) lead to the collecting container (2).

6. Device according to one of the preceding claims, characterised in that at least one, preferably three symmetrically arranged, vertical suction pipes (18) open into the collecting container (2) and lead to the outside through the upper cover plate (4), and in that each suction pipe (18) preferably comprises a flexible connecting element (22) for the attachment of a further connecting pipe.

7. Device according to claim 6, characterised in that the suction pipe (18) preferably comprises a high-performance pressure pump (21) in its lower part.

8. Device according to one of the preceding claims, characterised in that the paraboloidal or funnel-shaped suction trough (10) is fitted approximately half way up the collecting container (2) and with its inner wall (38) leads from the outer sleeve surface of the collecting container (2) like a funnel to the underside (33) of the floating body (8).

9. Device according to claim 8, characterised in that the upper edge (11) of the suction trough (10) with its outer conical surface (40) forms an obtuse angle α 140°.

10. Device according to one of the preceding claims, characterised in that the suction trough (10) has a height adjusting mechanism (12) with a screw spindle (13) with motor drive (15) and a screw nut (14).

11. Device according to claim 10, characterised in that the suction trough (10) is designed as a hollow body with additional buoyancy bodies (16).

12. Device according to one of the preceding claims, characterised in that underneath the collecting container (2) a preferably cylindrical hollow cavity is provided as a stabiliser (23) which preferably has side and/or lower inlet openings (25, 27).

13. Device according to one of the preceding claims, characterised in that the outer sleeve surface of the collecting container (2) or the stabiliser (23) comprises a steering device (28) possibly with a drive screw, whereby the drive screw is preferably designed as a separate or additional aileron screw (29).

## Revendications

1. Dispositif pour absorber des liquides flottants, comme du pétrole, de l'essence ou analogue, en particulier pour des plans d'eau pollués par du pétrole ou de l'essence, comportant un récipient collecteur (2) en forme de cylindre ou d'auge, plongeant dans le plan d'eau, qui, dans sa zone supérieure, est porté, au moins en partie, par un flotteur (8) de préférence annulaire, des ouvertures d'entrée (3) pour le liquide (6) à absorber étant prévues directement au-dessous du flotteur (8) et le liquide absorbé (6) dans le récipient collecteur (2) pouvant être transporté, par l'intermédiaire d'au moins une pompe d'alimentation (21), vers un poste d'évacuation,
caractérisé en ce que les moyens (9) fournissant la force portante du flotteur (8) sont réalisés de sorte que celui-ci repose très largement sur le plan d'eau (7) et en ce que, sous le flotteur (8), se trouve une cuve d'aspiration (10) en forme de trémie, entourant le récipient collecteur (2), qui forme, avec le flotteur (8), une fente d'aspiration définie (s), qui correspond à la largeur du courant de liquide à aspirer.

2. Dispositif selon la revendication 1,
caractérisé en ce que la fente d'aspiration (s) entre le dessous (33) du flotteur (8) et le dessus (11) de la cuve d'aspiration (10) de forme parabolique présente une largeur variable et correspond à s ≤ 300 mm.

3. Dispositif selon la revendication 1,
caractérisé en ce que le récipient collecteur (2) et/ou le flotteur (8) et/ou la cuve d'aspiration (10) en forme de trémie présentent une symétrie de révolution.

4. Dispositif selon la revendication 1 ou 3,
caractérisé en ce que le flotteur (8) est réalisé sous forme de flotteur annulaire du type disque en forme de couronne, qui présente, à l'intérieur de celui-ci, une ou plusieurs chambres fournissant la force portante (9) de volume variable, le flotteur annulaire (8) étant avantageusement divisé en plusieurs segments de flottabilité séparés.

5. Dispositif selon la revendication 4,
caractérisé en ce que la zone annulaire interne du flotteur (8) est recouverte par une plaque de recouvrement (4) munie d'ouvertures d'entrée (5), les ouvertures d'entrée (5) menant au récipient collecteur (2).

6. Dispositif selon une des revendications précédentes,
caractérisé en ce qu'au moins un, avantageusement trois tubes d'aspiration (18) verticaux et agencés symétriquement débouchent dans le récipient collecteur (2) et mènent vers l'extérieur à travers la plaque de recouvrement supérieure (4), et en ce que chaque tube d'aspiration (18) présente de préférence un élément de raccordement souple (22) pour le raccordement d'un autre tube de raccordement.

7. Dispositif selon la revendication 6,
caractérisé en ce que le tube d'aspiration (18) présente avantageusement, dans sa zone inférieure, une pompe de refoulement (21) à haute puissance.

8. Dispositif selon une des revendications précédentes,
caractérisé en ce que la cuve d'aspiration (10) en forme de trémie ou de forme parabolique est agencée sensiblement à mi-hauteur du récipient collecteur (2) sur celui-ci et, par sa paroi interne (38), mène de la surface d'enveloppe externe du récipient collecteur (2), en forme de trémie, vers le dessous (33) du flotteur (8).

9. Dispositif selon la revendication 8,
caractérisé en ce que le bord supérieur (11) de la cuve d'aspiration (10) forme, avec sa surface d'enveloppe conique externe (40), un angle obtus α ≃ 140°.

10. Dispositif selon une des revendications précédentes,
caractérisé en ce que la cuve d'aspiration (10) présente un dispositif de réglage en hauteur (12), comportant une tige filetée (13) à entraînement motorisé (15), ainsi qu'un écrou correspondant (14).

11. Dispositif selon la revendication 10,
caractérisé en ce que la cuve d'aspiration (10) est réalisée sous forme de corps creux présentant d'autres corps (16) fournissant la force portante.

12. Dispositif selon une des revendications précédentes,
caractérisé en ce que, en dessous du récipient collecteur (2), il est prévu une cavité avantageusement cylindrique comme stabilisateur (23), qui présente avantageusement des ouvertures d'entrée (25,27) latérales et/ou inférieures.

13. Dispositif selon une des revendications précédentes,
caractérisé en ce que la surface d'enveloppe externe du récipient collecteur (2) ou du stabilisateur (23) comporte un dispositif à gouvernail (28) le cas échéant avec une hélice d'entraînement, l'hélice d'entraînement étant avantageusement réalisée comme hélice transversale de gouvernail (29) supplémentaire ou séparée.
